# EUROPÄISCHE PATENTSCHRIFT

(11) **EP 2 872 789 B1**
(45) Veröffentlichungstag und Bekanntmachung des Hinweises auf die Patenterteilung: **02.05.2018**
(21) Anmeldenummer: 13735044.3
(22) Anmeldetag: 11.07.2013
(51) Int. Cl.: F16D 55/2265

(54) **SCHEIBENBREMSE FÜR EIN NUTZFAHRZEUG**
DISK BRAKE FOR A COMMERCIAL VEHICLE
FREIN À DISQUE POUR VÉHICULE UTILITAIRE

(30) Priorität: 13.07.2012 DE 102012013957
(43) Veröffentlichungstag der Anmeldung: 20.05.2015
(73) Patentinhaber: KNORR-BREMSE Systeme für Nutzfahrzeuge GmbH, 80809 München (DE)
(72) Erfinder: LÖW, Alfred, 94094 Rotthalmünster (DE)
(86) Internationale Anmeldenummer: PCT/EP2013/064658
(87) Internationale Veröffentlichungsnummer: WO 2014/009456

(56) Entgegenhaltungen:
- DE-A1- 10 143 805
- DE-A1- 10 242 102
- DE-A1-102006 050 647
- US-A1- 2008 029 356

## Beschreibung

Die Erfindung betrifft eine Scheibenbremse für ein Nutzfahrzeug nach dem Oberbegriff des Anspruchs 1.

Bei solchen, als Schiebesattelbremsen bezeichneten Scheibenbremsen wird der Bremssattel mit einem ortsfesten, am Fahrzeug befestigten Bremsträger verbunden. Dazu sind Führungsbuchsen mittels Schrauben am Bremsträger befestigt und bilden gemeinsam mit im Bremssattel angeordneten Gleitbuchsen Gleitlager, wobei die Führungsbuchsen in den Gleitbuchsen so geführt sind, dass eine axiale Verschiebung des Bremssattels relativ zum Bremsträger möglich ist.

Die Führungsbuchse wird aus Vollmaterial, vornehmlich einem Rundstahl hergestellt und spanend bearbeitet, wobei an der dem Bremsträger zugewandten Stirnseite ein Bündchen angeformt ist, das in eine daran angepasste Stufenbohrung des Bremsträgers eingesetzt ist, wodurch eine Zentrierung der Führungsbuchse erreicht wird.

Das zentrische Mittelloch der Stufenbohrung weist ein Gewinde auf, in das die mit ihrem Schaft durch die Buchse geführte Schraube eingedreht ist, deren Kopf sich an der gegenüberliegenden Seite der Führungsbuchse abstützt. Bevorzugt kommt hierbei eine Zylinderkopfschraube mit Innensechskant zum Einsatz, die sich mit ihrem Kopf am Grund der ersten Stufe der gleichfalls als Stufenbohrung ausgebildeten Durchgangsbohrung der Führungsbuchse abstützt.

Neben der erwähnten spanenden Anformung des Bündchens sowie der Einbringung der Durchgangsbohrung muss die Mantelfläche der Führungsbuchse für die Funktion als Gleitlager hergerichtet werden, beispielsweise durch Schleifen und/oder eine Wärmebehandlung bei gehärteter Ausführung.

Von den beiden Gleitlagern ist eines als Fest- und das andere als Loslager ausgebildet zum Ausgleich von fertigungsbedingten Toleranzen. Dies erfordert eine Vielzahl von Varianten an Führungsbuchsen ebenso wie eine entsprechende Anzahl an unterschiedlichen Schrauben.

Naturgemäß führt dies zu einem erheblichen Fertigungs- und/oder Bevorratungsaufwand mit den sich daraus ergebenden Kostennachteilen, die einer Kostenoptimierung, wie sie gerade bei Serienprodukten stets angestrebt wird, entgegensteht.

In der DE 101 43 805 A1 ist eine Scheibenbremse offenbart, bei der die Schraube, mit der die Führungsbuchse am Bremsträger befestigt ist, mit ihrem Kopf an der den Bremsträger gegenüberliegenden Stirnseite anliegt, wobei die umlaufenden Anlageflächen keilförmig ausgebildet sind, d.h., schräg zur Längsachse. Damit soll zum einen eine Zentrierung der Führungsbuchse zur Schraube erreicht werden und zum anderen ein Anpressen der Führungsbuchse gegen den Schaft der Schraube.

Aus der US 2008/0029356 A1 ist ein Gleitlager einer Scheibenbremse bekannt, mit einem Tragbolzen, auf dem ein Bremssattel führbar ist und der in den Bremsträger einschraubbar ist, wozu ein Gewindeabschnitt an einem Ende des Tragbolzens vorgesehen ist, der in eine konische Fläche hin zu einem Führungsabschnitt des Tragbolzens übergeht. Im Wesentlichen soll durch diese konische Fläche eine Zentrierung beim Einschrauben des Tragbolzens erreicht werden.

Bei einer zweiten Variante des Gleitlagers ist ein in den Bremsträger einschraubbarer Bolzen vorgesehen, auf dem eine elastische Hülse gelagert ist, die wiederum von einer Gleithülse ummantelt ist.

In der DE 102 42 102 A1 ist ein Gleitlager gezeigt und beschrieben, das ausschließlich aus einem als Schraube ausgebildeten Führungsholm besteht, mit einem endseitigen Gewindeabschnitt, der konisch ausläuft, um eine einfache Zentrierung beim Einschrauben zu erreichen.

Der Erfindung liegt die Aufgabe zugrunde, eine Scheibenbremse der gattungsgemäßen Art so weiterzuentwickeln, dass sie mit konstruktiv einfachen Mitteln kostengünstiger herstell- und montierbar ist.

Diese Aufgabe wird durch eine Scheibenbremse mit den Merkmalen des Anspruchs 1 gelöst.

Damit ist eine Scheibenbremse geschaffen, die durchaus bemerkenswert kostengünstiger herstellbar ist als die bekannten Scheibenbremsen.

Zunächst kann als Führungsbuchse ein genormtes, vorzugsweise nahtloses Stahlrohr zum Einsatz kommen, das für eine spanende Bearbeitung sowie Wärmebehandlung geeignet ist.

Durch den Verzicht auf das Einbringen einer Durchgangsbohrung in die Führungsbuchse ergeben sich nicht nur Fertigungsvorteile, sondern auch eine Materialersparnis.

Die Verkeilung der Führungsbuchse mit der Schraube ermöglicht die Verwendung gleicher Schrauben für die verschiedenen Einsätze, was ebenso zu einer Kostenoptimierung beiträgt, wie lediglich eine Ausführung für alle Führungsbuchsen. Insbesondere ist die Bevorratung sowohl mit Schrauben wie auch mit Führungsbuchsen erheblich vereinfacht.

Das als Rohr vorliegende Halbzeug der Führungsbuchse kann so dimensioniert sein, dass eine Härtung mit folgender Wärmebehandlung und anschließendem Schleifen der Mantelfläche innerhalb der vorgegebenen geringen Toleranzen möglich ist.

Die Verkeilung der Führungsbuchse an der Schraube erfolgt nach der Erfindung durch eine Keilhülse, mit einer in Schraubrichtung ansteigenden Keilfläche, die bevorzugt die Innenfläche bildet, während die äußere, an der Innenwand der Führungsbuchse anliegende Mantelfläche zylindrisch gehalten ist.

Zur Erzeugung der Keilwirkung, d.h. zur Aufspreizung der Keilhülse, ist diese in Achsrichtung durchgehend geschlitzt, wobei der zumindest über eine Teilhöhe an die Schräge der Innenfläche der Keilhülse angepasste Kopf der Schraube beim Einschrauben für eine Spreizung und Verkeilung mit der Führungsbuchse sorgt.

Nach einem weiteren Gedanken der Erfindung ist die Keilhülse als Blechteil aus einem Streifen gerollt und in die Führungsbuchse entweder eingepresst oder mit Spiel eingelassen.

Je nach Auslegung des Kegelverhältnisses zwischen dem Kopf der Schraube und der Keilhülse wird eine selbstsichernde Klemmwirkung erreicht, die bei Erreichen einer bestimmten radialen Klemmkraft zu einer radialen Dehnung der Führungsbuchse führt, wodurch eine Anpressung an die Wandung der Aufnahmebohrung des Bremsträgers erfolgt, in der die Führungsbuchse stirnseitig einliegt.

Als axiales Widerlager, an dem sich die Keilhülse abstützt, kann nach einer Variante der Erfindung die Führungsbuchse in dem dem Bremsträger zugewandten Stirnseitenbereich einen radial nach innen gezogenen umlaufenden Kragen aufweisen.

Nach einer anderen Ausbildung wird das Widerlager durch den Grund der bremsträgerseitigen Stufenbohrung gebildet, in deren erster Stufe die Führungsbuchse einliegt.

In diesem Fall wird die Keilhülse in die Führungsbuchse eingepresst, so dass eine Verliersicherung entsteht, die Montagevorteile bringt.

Da die Keilhülse im Verbindungsbereich mit dem Bremsträger angeordnet ist, demzufolge auch der Kopf der Schraube hier positioniert ist, kann die Schraube, gegenüber einer nach dem Stand der Technik, erheblich kürzer gehalten werden, was sich ebenfalls kostenmindernd auswirkt.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Bremsträger einer erfindungsgemäßen Scheibenbremse in einer perspektivischen Ansicht
- Figuren 2 und 3: jeweils ein Ausführungsbeispiel der Erfindung in einem Längsschnitt, entsprechend der Linie X-X in Figur 1.

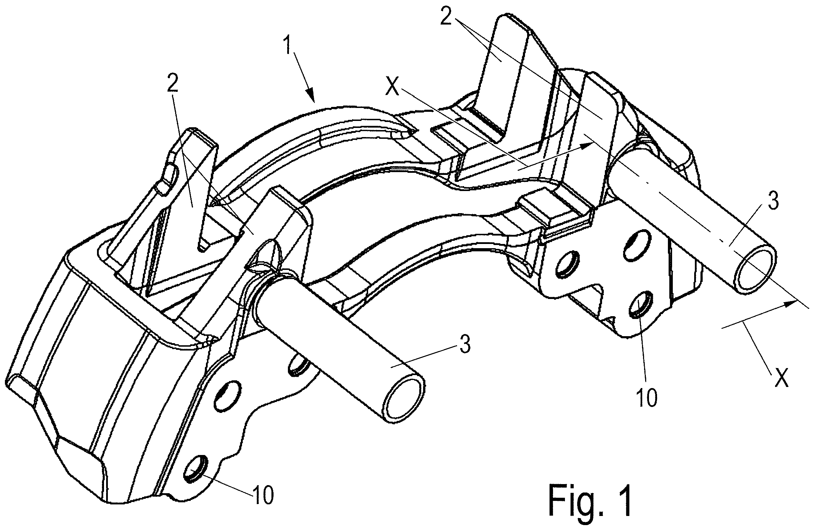

In der Figur 1 ist ein Bremsträger 1 einer Scheibenbremse für ein Nutzfahrzeug dargestellt, der fest mit dem Fahrzeug verbindbar ist, wozu Durchgangsbohrungen 10 für Verbindungsschrauben vorgesehen sind.

Der Bremsträger 1 weist zwei Belagschächte auf, die jeweils durch einander gegenüberliegende Bremsträgerhörner 2 begrenzt sind, die für eingesetzte, eine Bremsscheibe im Fall einer Bremsung beidseitig kontaktierende Bremsbeläge eine Abstützung bilden, für die Aufnahme auftretender Bremsmomente.

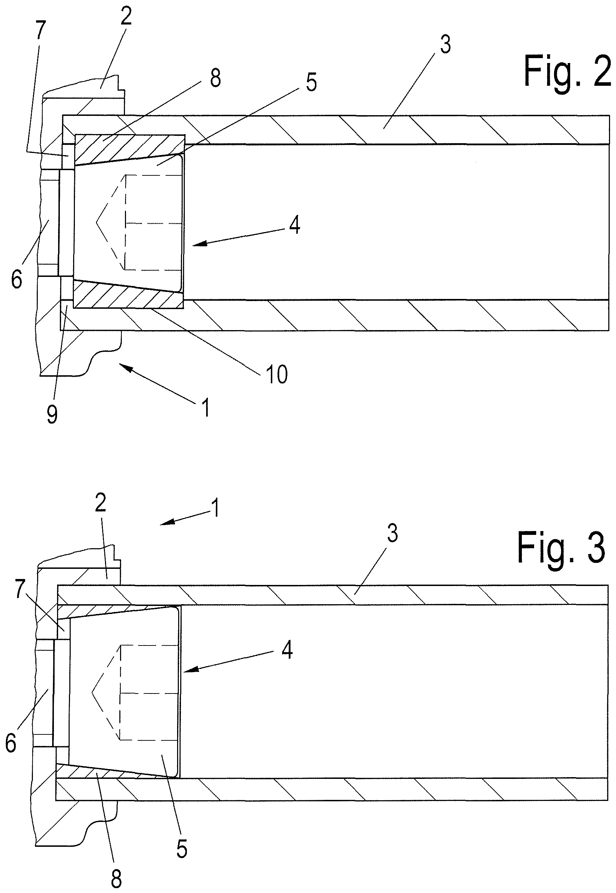

An den Bremsträgerhörnern 2 eines Belagschachtes sind jeweils eine Führungsbuchse 3 mittels Schrauben 4 (Figuren 2 und 3) befestigt, wobei die parallel und abständig zueinander angeordneten Führungsbuchsen 3 jeweils in eine Stufenbohrung 7 des Bremsträgers 1 eingesteckt sind, in deren Mittenbohrung mit Gewinde die Schraube 4 mit einem Schaft 6 eingedreht ist.

Erfindungsgemäß ist jede Führungsbuchse 3 mit der zugeordneten Schraube 4 verkeilt. Hierzu ist in den dem Bremsträger 1 zugewandten Endbereich der Führungsbuchse 3 eine Keilhülse 8 eingelassen, mit einer in Einschraubrichtung der Schraube 4 ansteigenden inneren konzentrischen Keilfläche, an der sich der daran angepasste, also als Kegelstumpf ausgebildete Kopf 5 der Schraube 4 abstützt.

Bei dem in der Figur 2 gezeigten Ausführungsbeispiel liegt die Führungsbuchse 3 mit einem radial nach innen gezogenen umlaufenden Kragen 9 stirnseitig am Grund der ersten Stufe der Stufenbohrung 7 an. Dieser umlaufende Kragen 9 bildet gleichzeitig ein Widerlager für die Keilhülse 8 beim Eindrehen der Schraube 4 und dem dadurch bedingten Spreizen der Keilhülse 8, die im Übrigen zur Erzielung der Spreizung in Achsrichtung durchgehend geschlitzt ist.

Die Keilhülse 8 liegt in einem hinterschnittenen Abschnitt 10 der Innenbohrung der Führungsbuchse 3, so dass der Außendurchmesser der Keilhülse 8 größer ist als der lichte Durchmesser der Innenbohrung, während der größte Durchmesser des Kopfes 5 etwas kleiner ist als der lichte Durchmesser der Innenbohrung. Diese Ausführungsvariante lässt sich besonders kostengünstig herstellen, da lediglich der hinterschnittene Bereich bearbeitet werden muss.

Während bei diesem Beispiel die Keilhülse 8 mit einem gewissen, wenn auch geringen Spiel in die Führungsbuchse 3 eingelassen ist, ist die Keilhülse 8 bei der in der Figur 3 gezeigten Variante in die Führungsbuchse 3 eingepresst. Dabei liegt die Keilhülse 8 mit ihrer einen Stirnseite am Grund der ersten Stufe der Stufenbohrung 7 an, der damit ein Widerlager für die Keilhülse 8 bei deren Verspannung bildet.

Um eine weitgehend gleichmäßige Einwirkung, d.h., einen weitgehend gleichmäßigen Anpressdruck der zylindrischen Mantelfläche der Keilhülse 8 an der Innenwandung der Führungsbuchse 3 zu erreichen, entspricht die Höhe des Kopfes 5 der Schraube 4 etwa der axialen Länge der Keilhülse 8 bzw. ist geringfügig kürzer.

Zur Drehung der Schraube 4 ist in den Kopf 5 eine Werkzeugaufnahme eingelassen, im Beispiel ein Innensechskant, in den ein vom freien Ende der Führungsbuchse 3 her eingeführter Werkzeugschlüssel eingreifen kann.

Der Durchmesser der ersten Stufe der Stufenbohrung 7 entspricht bevorzugt dem Außendurchmesser der Führungsbuchse 3, so dass bei ausreichender Verspannung der Keilhülse 8 die Führungsbuchse 3 radial so weit gedehnt wird, dass sie unter Druck an der Wandung der Stufenbohrung 7 anliegt, wobei dies insbesondere bei dem in der Figur 3 gezeigten Beispiel ohne weiteres zu realisieren ist.

### Bezugszeichenliste

- 1: Bremsträger
- 2: Bremsträgerhörner
- 3: Führungsbuchse
- 4: Schraube
- 5: Kopf
- 6: Schaft
- 7: Stufenbohrung
- 8: Keilhülse
- 9: Kragen
- 10: hinterschnittener Abschnitt

## Patentansprüche

1. Scheibenbremse für ein Nutzfahrzeug, mit einem eine Bremsscheibe umfassenden Bremssattel, der an einem ortsfesten Bremsträger (1) durch daran mittels Schrauben (4) befestigten, parallel und abständig zueinander angeordneten, Gleitlager bildenden und mit der jeweils zugeordneten Schraube (4) verkeilten Führungsbuchsen (3) in Zuspannrichtung verschiebbar gehalten ist, **dadurch gekennzeichnet, dass** zwischen der jeweiligen Schraube (4) und der Führungsbuchse (3) eine Keilhülse (8) angeordnet ist mit einer in Einschraubrichtung ansteigenden Keilfläche.

2. Scheibenbremse nach Anspruch 1, **dadurch gekennzeichnet, dass** sich eine zylindrische Mantelfläche der Keilhülse (8) an der Innenseite der Führungsbuchse (3) abstützt und die Innenfläche als Keilfläche ausgebildet ist, an der ein daran angepasster Kopf (5) der Schraube (4) anliegt.

3. Scheibenbremse nach Anspruch 1 oder 2, **dadurch gekennzeichnet, dass** die Führungsbuchse (3) aus einem vorzugsweise nahtlosen Rohr gebildet ist.

4. Scheibenbremse nach einem der vorhergehenden Ansprüche, **dadurch gekennzeichnet, dass** die Keilhülse (8) einen durchgehenden Axialschlitz aufweist.

5. Scheibenbremse nach einem der vorhergehenden Ansprüche, **dadurch gekennzeichnet, dass** die Keilhülse (8) aus einem gerollten Blech hergestellt ist, dessen einander zugewandte Kanten abständig zueinander den Axialschlitz begrenzen.

6. Scheibenbremse nach einem der vorhergehenden Ansprüche, **dadurch gekennzeichnet, dass** die Keilhülse (8) in die Führungsbuchse (3) eingepresst ist oder mit geringem Spiel einliegt.

7. Scheibenbremse nach einem der vorhergehenden Ansprüche, **dadurch gekennzeichnet, dass** die Keilhülse (8) an dem dem Bremsträger (2) zugewandten Endbereich der Führungsbuchse (3) positioniert ist.

8. Scheibenbremse nach einem der Ansprüche 2 bis 7, **dadurch gekennzeichnet, dass** der Steigungswinkel der Keilfläche und des anliegenden Kopfes (5) für eine Selbsthemmung gewählt ist.

9. Scheibenbremse nach einem der vorhergehenden Ansprüche, **dadurch gekennzeichnet, dass** sich die Keilhülse (8) am Grund der ersten Stufe einer Stufenbohrung (7) des Bremsträgers (1) abstützt oder an einem radial nach innen gerichteten umlaufenden Kragen der Führungsbuchse (3) der am Grund der ersten Stufe der Stufenbohrung (7) aufliegt.

10. Scheibenbremse nach einem der vorhergehenden Ansprüche, **dadurch gekennzeichnet, dass** die Keilhülse (8) in einem hinterschnittenen Abschnitt (10) der Führungsbuchse (3) einliegt, dessen Durchmesser größer ist als der lichte Durchmesser der Führungsbuchse (3).

11. Scheibenbremse nach einem der Ansprüche 2 bis 10, **dadurch gekennzeichnet, dass** die Höhe der Kegelfläche des Kopfes (5) etwa der Höhe der Keilhülse (8) entspricht.

## Claims

1. Disk brake for a commercial vehicle, having a brake caliper which encloses a brake disk and is held on a stationary brake carrier (1) such that it can be displaced in the brake application direction by way of guide bushings (3) which are fastened to said brake carrier (1) by means of screws (4), are arranged parallel to and at a spacing from one another, form plain bearings and are wedged with the respectively associated screw (4), **characterized in that** a wedge sleeve (8) with a wedge face which rises in the screwing-in direction is arranged between the respective screw (4) and the guide bushing (3).

2. Disk brake according to Claim 1, **characterized in that** a cylindrical circumferential face of the wedge sleeve (8) is supported on the inner side of the guide bushing (3), and the inner face is configured as a wedge face, against which a head (5), adapted thereto, of the screw (4) bears.

3. Disk brake according to Claim 1 or 2, **characterized in that** the guide bushing (3) is formed from a preferably seamless tube.

4. Disk brake according to one of the preceding claims, **characterized in that** the wedge sleeve (8) has a continuous axial slot.

5. Disk brake according to one of the preceding claims, **characterized in that** the wedge sleeve (8) is produced from a rolled metal sheet, the edges of which, which face one another, delimit the axial slot at a spacing from one another.

6. Disk brake according to one of the preceding claims, **characterized in that** the wedge sleeve (8) is pressed into the guide bushing (3) or lies in it with a small play.

7. Disk brake according to one of the preceding claims, **characterized in that** the wedge sleeve (8) is positioned on that end region of the guide bushing (3) which faces the brake carrier (2).

8. Disk brake according to one of Claims 2 to 7, **characterized in that** the gradient angle of the wedge face and of the head (5) which bears against it is selected for a self-locking action.

9. Disk brake according to one of the preceding claims, **characterized in that** the wedge sleeve (8) is supported on the bottom of the first step of a stepped bore (7) of the brake carrier (1) or on a radially inwardly directed circumferential collar of the guide bushing (3), which collar rests on the bottom of the first step of the stepped bore (7).

10. Disk brake according to one of the preceding claims, **characterized in that** the wedge sleeve (8) lies in an undercut section (10) of the guide bushing (3), the diameter of which undercut section (10) is greater than the inside diameter of the guide bushing (3).

11. Disk brake according to one of Claims 2 to 10, **characterized in that** the height of the conical face of the head (5) corresponds approximately to the height of the wedge sleeve (8).

## Revendications

1. Frein à disque pour un véhicule utilitaire, comprenant un étrier de frein, qui entoure un disque de frein et qui est maintenu coulissant à l'état serré par des douilles (3) de guidage, qui sont fixées au moyen de vis (4) à un support (1) de frein fixe, qui forment des paliers lisses parallèles à distance l'un de l'autre et qui sont clavetées avec la vis (4) associée respectivement, **caractérisé en ce qu'**entre la vis (4) respective et la douille (3) de guidage, est disposé un manchon (8) formant coin et ayant une surface de coin montante dans la direction de vissage.

2. Frein à disque suivant la revendication 1, **caractérisé en ce qu'**une surface latérale cylindrique du manchon (8) formant coin s'appuie sur la face intérieure de la douille (3) de guidage et la face intérieure est constituée en surface de coin, à laquelle s'applique une tête (5) qui y est adaptée de la vis (4).

3. Frein à disque suivant la revendication 1 ou 2, **caractérisé en ce que** la douille (3) de guidage est formée d'un tuyau, de préférence sans couture.

4. Frein à disque suivant l'une des revendications précédentes, **caractérisé en ce que** le manchon (8) formant coin a une fente axiale continue.

5. Frein à disque suivant l'une des revendications précédentes, **caractérisé en ce que** le manchon (8) formant coin est en une tôle cintrée, dont les bords, tournés l'un vers l'autre, délimitent la fente axiale en étant à distance l'un de l'autre.

6. Frein à disque suivant l'une des revendications précédentes, **caractérisé en ce que** le manchon (8) formant coin est enfoncé dans la douille (3) de guidage ou y entre avec un jeu petit.

7. Frein à disque suivant l'une des revendications précédentes, **caractérisé en ce que** le manchon (8) formant coin est placé à la région d'extrémité, tourné vers le support (2) de frein, de la douille (3) de guidage.

8. Frein à disque suivant l'une des revendications 2 à 7, **caractérisé en ce que** l'angle de montée de la surface formant coin et de la tête (5) s'appliquant est choisi pour obtenir un blocage automatique.

9. Frein à disque suivant l'une des revendications précédentes, **caractérisé en ce que** le manchon (8) formant coin s'appuie au fond du premier palier d'un trou (7) à palier du support (1) de frein ou sur un collet, faisant le tour et dirigé radialement vers l'intérieur, de la douille (3) de guidage, qui s'applique au fond du premier palier du trou (7) à palier.

10. Frein à disque suivant l'une des revendications précédentes, **caractérisé en ce que** le manchon (8) formant coin vient dans une partie (10) en contre-dépouille de la douille (3) de guidage, dont le diamètre est plus grand que le diamètre intérieur de la douille (3) de guidage.

11. Frein à disque suivant l'une des revendications 2 à 10, **caractérisé en ce que** la hauteur de la surface conique de la tête (5) correspond à peu près à la hauteur du manchon (8) formant coin.
